# EUROPEAN PATENT SPECIFICATION

(11) **EP 2 949 050 B1**
(45) Date of publication and mention of the grant of the patent: **17.07.2019**
(21) Application number: 13872727.6
(22) Date of filing: 25.01.2013
(51) Int. Cl.: H04B 5/02, H04B 5/00, H04W 4/80

(54) **INDICATION OF NFC LOCATION**
ANZEIGE EINER NFC-POSITION
INDICATION D'UN EMPLACEMENT DE COMMUNICATION EN CHAMP PROCHE

(43) Date of publication of application: 02.12.2015
(73) Proprietor: Hewlett-Packard Development Company, L.P., Spring TX 77389 (US)
(72) Inventor: LAGNADO, Isaac, Houston, Texas 77070 (US)
(74) Representative: HGF Limited
(86) International application number: PCT/US2013/023256
(87) International publication number: WO 2014/116235

(56) References cited:
- EP-A1- 2 487 805
- JP-A- 2010 102 531
- KR-A- 20130 008 920
- KR-B1- 101 139 096
- KR-B1- 101 139 096
- US-A1- 2010 190 537
- US-A1- 2012 322 374
- US-A1- 2012 322 374

## Description

### Background

Near field communication (NFC) is a set or standards for computers and similar devices to establish radio communication with each other by touching them together or bringing them into close proximity, usually no more than a few centimeters. NFC may be used for contactless transactions, data exchange, and simplified setup of more complex communications such as Wi-Fi. Communication is also possible between an NFC device and an unpowered NFC chip, called a "tag" such as those used in credit cards or identification cards. KR 10-1139096 relates to a payment method using a display device with a built-in antenna for a contactless reader. Location information of an NFC antenna on a screen of a display device is stored in a non volatile storage device of a terminal. When a payment program is initiated in the terminal, the terminal reads the location information from the non volatile storage device. The terminal displays a payment window at a screen location corresponding to the location information.

US 2012/0322374 relates to indicating the position of the antenna incorporated in a communication apparatus to a user for aligning the antenna of the communication apparatus with the antenna of an external device. A portable device includes a loop antenna for performing near-field communication, a display unit provided on a side of the portable device opposite the orientation of the loop antenna, and an antenna position information storing unit that stores antenna position information representing the position of the loop antenna in the portable device. The display device displays the position of the loop antenna on the basis of the antenna position information stored in the antenna position information storing unit.

EP 2 487 805 relates to An information processing apparatus including a housing having a first surface and a second surface; a display disposed on the first surface of the housing; a near-field communication interface disposed at a first position on or beneath the second surface; and a processor configured to control the display to display a graphic indication corresponding to the near-field communication interface at a second position opposing the first position.

The invention is defined by the independent claims 1, 6 and 12. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/ or examples mentioned in the description that do not fall under the scope of the claims are useful for understanding the invention.

### Brief Description Of The Drawings

Some embodiments of the invention are described with respect to the following figures:
Fig. 1 is a computing device including a near field communication (NFC) antenna according to an example implementation;
Fig. 2 is a cross section of a computing device including a near field communication (NFC) antenna according to an example implementation;
Fig. 3 is a block diagram of a computing device including a near field communication (NFC) antenna according to an example implementation;
Fig. 4 is a flow diagram of a method of displaying a location of a near field communication (NFC) component according to an example implementation;
Fig. 5 is a flow diagram of a method of displaying a location of a near field communication (NFC) component according to an example implementation; and
Fig. 6 is a computing system including a computer readable medium according to an example implementation.

### Detailed Description

Near Field Communication (NFC) has made it easier to transfer data between two items that are In close proximity to one another. For example data can be transferred between a computing device and another computing device if they are in close proximity. The computing devices may be for example, a notebook computer, a tablet computer, a phone, or another computing device.

NFC uses wireless transmission of data, to implement NFC an NFC antenna and an NFC integrated circuit (IC) are included in the computing device. The NFC antenna may be mounted behind the display. For a device mounting the NFC antenna behind the display allows for better ergonomic since the user would not have to reach around to the back of the electronic device. A computing device housing may also be made out of a conductive material such as aluminum, magnesium, carbon fiber or another material that shields wireless antennas from receiving or transmitting a signal. If the housing is made of a material that interferes with wireless signals then mounting the NFC antenna behind the display can allow the antenna to be mounted within the computing device and transmit or receive signals through the display.

NFC has a short range and in some case an NFC reader inductively powers an NFC device to read the data from the NFC device. When for example a computing device is larger than an NFC antenna it may be important to know where the antenna is within the computing device. For example a tablet computing device may be much larger than the antenna causing it to be difficult to line up the NFC antennas in two NFC devices.

In one example implementation a computing device can include a display and a Near Field Communication (NFC) antenna. The NFC antenna may be behind the display. Behind the display may mean that the display or a portion of the display may be between the user or another NFC device and the NFC antenna in the computing device. The computing device can include a controller to display on the display an indication of the location of the NFC antenna.

Another example implementation is a method of displaying a location of an NFC antenna on a display of a computing device. The method can include retrieving, from a storage device, data indicating the location of an indication to be displayed on a display of a computing device. The method may also include displaying, on the display, an indication of the location of the NFC antenna.

In another example implementation a non-transitory computer readable medium includes code that if executed by a processor in a computing device causes the processor to determine when an NFC antenna is expecting an NFC data transmission. The code may also cause the processor to indicate on the display the location of an NFC antenna located behind the display.

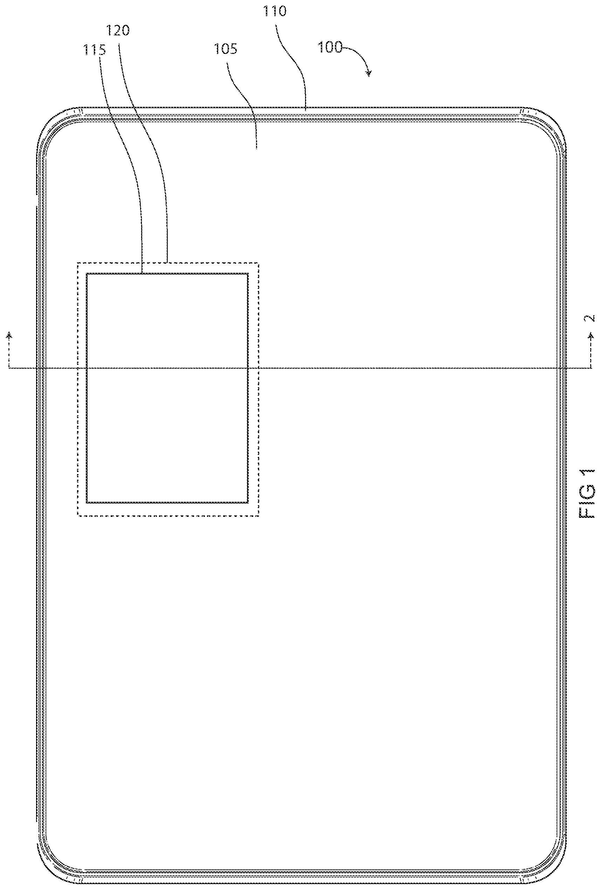

With reference to the figures, Fig. 1 is a computing device 100 including a near field communication (NFC) antenna 120 according to an example implementation. The computing device 100 includes a display 105. A Near Field Communication (NFC) antenna 120 can be located behind at least a portion of the display 105, therefore the location of the NFC antenna is shown as a dotted line. The display may be made of multiple layers, such as a front glass and a light guide for the back light, and at least one of the layers of the display are between the user and the NFC antenna 120. The NFC antenna 120 may also be printed on a layer of the display 105, the layer may be the front glass, a light guide or another layer. The NFC antenna is connected to an NFC circuit.

The display 105 may be mounted in a chassis 110. The chassis 110 may be may of a conductive material such a such as aluminum, magnesium, carbon fiber or another material that shields wireless antennas from receiving or transmitting a signal. If the chassis shields the NFC antenna 120 from receiving or sending signals through the chassis the signal to or from the antenna can pass through the display.

To transmit or receive data the NFC antenna 120 has to be in close proximity to the NFC antenna on another NFC device, therefore it may be important to know where the NFC antenna is located in the computing device. Putting markings on the display such as etching the glass would impede the use of the display. Therefore a controller (not shown in Fig. 1) in the computing device can cause a graphical indication 115 of the location of the NFC antenna to be displayed on the display 105. The indication 115 can be a graphical image. The indication 115 may be for example a square, rectangle, or another shape. The indication 115 may include text such as "NFC", "place phone here", or other text. The text may be dependent on the type of NFC device the NFC antenna 120 is expecting. The indication may be the outline of a shape or may be filled in.

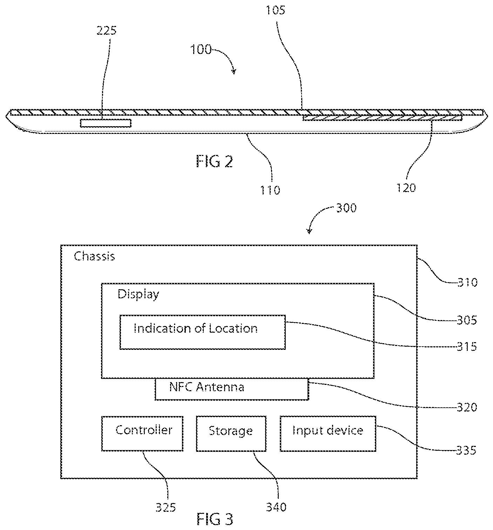

Fig. 2 is a cross section of a computing device 100 including a near field communication (NFC) antenna 120 according to an example implementation. The cross section is taken across "2" in Fig.1. As shown in Fig. 2 the NFC antenna 120 is between the chassis 110 and the display 105. If another NFC device was communicating with the NFC antenna 120 the NFC device would be placed against the display. The indication on the display would allow the NFC device to be aligned with the NFC antenna 120. The controller 225 may cause the indication to be displayed on the display 105 at the location of the NFC antenna 120.

Fig. 3 is a computing device 300 including a near field communication (NFC) antenna 320 according to an example implementation.

The computing device 300 includes a display 305. A Near Field Communication (NFC) antenna 320 can be located behind at least a portion of the display 305.

The display 305 may be mounted in a chassis 310. The chassis 310 may be may of a conductive material such a such as aluminum, magnesium, carbon fiber or another material that shields wireless antennas from receiving or transmitting a signal. If the chassis shields the NFC antenna 320 from receiving or sending signals through the chassis the signal to or from the antenna can pass through the display.

A controller 345 in the computing device can cause a graphical indication 115 of the location of the NFC antenna to be displayed on the display 105. The indication 115 can be a graphical image.

The controller 345 may be a general purpose processor for example. Logic may cause the indication to be displayed on the display. The logic may be may be in the form of the controller 325 which can cause the indication to be displayed on the display 305. The logic may include the controller executing an application that instructs the controller to display the indication on the screen when the application is expecting communication through the NFC antenna 320.

The application may be stored on a storage device 340 before being executing by the controller. For example if the application that is executing is a financial software and is expecting a credit card with a NFC device embedded to complete a transaction the application can cause the controller to display the indication 315 on the display 305. In another example the indication 315 may be displayed when the NFC antenna is expecting to communicate with another electronic device such as communicating data between the computing device 300 and another computing device, such as between a tablet computer and a phone. In this example the indication 315 in the display 305 can indicate the location of the NFC antenna making it easier to align an NFC antenna in the phone with the NFC antenna 320 in the computing device.

The controller may cause the indication to be displayed in response to an input device 335 that controls when the controller displays the indication on the display. The input device 335 may include a keyboard, a button, a mouse, a touch screen or another input device.

The storage 340 device may store the outline of multiple NFC devices. For example the indication 315 may change depending on the NFC device that is being communicated with, such as the indication may appear as one of a credit card, a phone, a tablet, the NFC antenna 320 or another device. The controller 325 can retrieve from the storage 340 the outline of the NFC device that is expected to be communicated with by the NFC antenna 320 and display that NFC device as the indication 315.

The controller 325 may remove the indication 315 from the display 305 after a data transmission through NFC antenna is complete. The indication may also be removed if the system is no longer expecting an NFC communication.

The display 305 may be a touch screen and senses the NFC device on the display 305. The computing device 300 may direct movement of the NFC device until the NFC antenna 320 and the NFC device can communicate. For example the computing device 300 may indicate that the NFC device needs to be move to the left for example to be able to communicate with the NFC antenna. The detection of the NFC device may be by an optical touch screen detection which detects any object on the screen. The detection may also be by approximating the location of the NFC device based on the location of a user's hand or fingers holding the NFC device to the display.

If the display 305 is a touch screen the touch screen may inadvertently detect an input from a user hand or an NFC device touching the touch screen. When an NFC device is expected and is held up to the display 305 a touch of the touch screen that was not intentional may cause the computing device to perform a function that was not intended. The touch screen or a portion of the touch screen may be disabled when the NFC antenna 320 is expecting communication with an NFC device. The touch screen may be disabled for example when the indication 315 is displayed on the display 305. If a portion of the touch screen is disabled the portion may be for example the area surrounding the indication 315 such as 10 centimeters surrounding the indication 315.

An NFC IC may have different operating modes such as a low power or high latency mode and a high power or low latency mode. To save power the NFC IC can operate in the low power mode and switch to the high power mode when an NFC device is expected to communicate with the NFC antenna 320. The NFC antenna may be in a low power mode when the indication 315 is not shown on the display 305 and switch to a high power mode when the indication 315 is shown on the display 305.

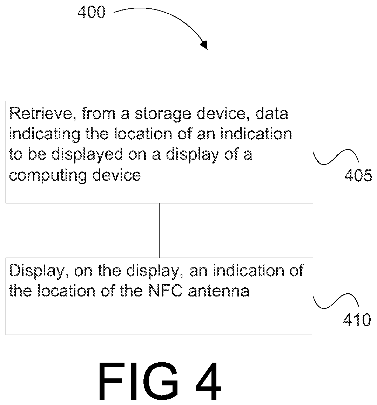

Fig. 4 is a flow diagram 400 of a method of displaying a location of a near field communication (NFC) component according to an example implementation. The method of displaying a location of a near field communication NFC antenna on a display of a computing device can include retrieving, from a storage device, data indicating the location of an indication to be displayed on a display of a computing device at 405. An indication of the location of the NFC antenna can be displayed on the display at 410.

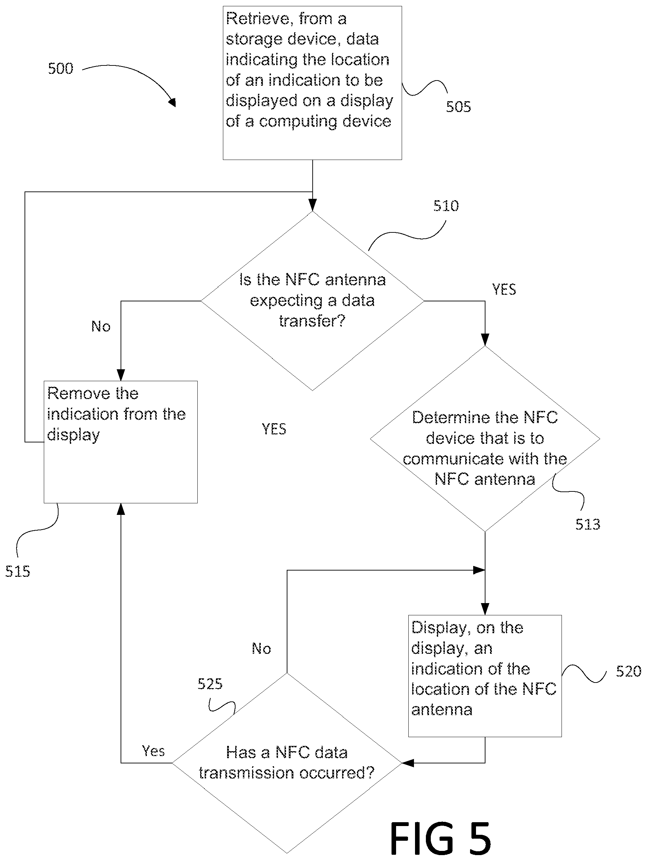

Fig. 5 is a flow diagram of a method 500 of displaying a location of a near field communication (NFC) component according to an example implementation.

The method of displaying a location of a near field communication NFC antenna on a display of a computing device can include retrieving, from a storage device, data indicating the location of an indication to be displayed on a display of a computing device at 505. At 510 it can be determined if the NFC antenna is expecting a data transfer. If it is determined that the NFC antenna is expecting a data transfer at 510 then it can be determined what NFC device that is expected to communicate with the NFC antenna at 513.

The location of the NFC antenna can be determined from the model number or the serial number of the computing device for example or the location may be determined from other identifying information of the computing device. The serial number, model number or other information may be stored on a storage device in the computing device. The location of the NFC antenna may also be determined from sensors. For example if the computing device includes a touch screen then the first use of the NFC antenna may determine the location of the highest signal strength of the NFC signal based on the location of the NFC device determined by the touch screen when the signal is the highest. The location of the highest signal strength can be used to as the location of the indication when the computing device is expecting an NFC communication. The location may also use internal sensor, for example there may be mounting locations on the display that include sensors to determine if the NFC antenna is attached.

The indication of the location of the NFC antenna can be displayed on the display at 520. It can be determined if an NFC data transmission has occurred at 525. If an NFC data transmission has occurred then the indication can be removed from the display at 515. If the transmission has not occurred at 525 then the indication continues to be displayed at 520.

If the NFC antenna is not expecting a data transfer at 510 then the method continues to 515.

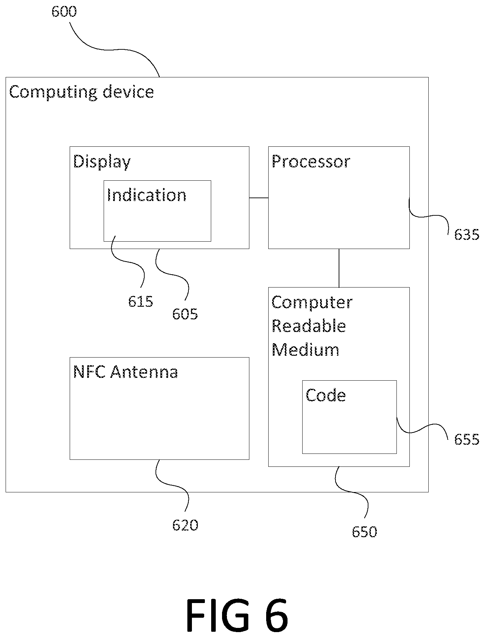

Fig. 6 is a computing device 600 including a computer readable medium 650 according to an example implementation. The computing device 600 includes a non-transitory computer readable medium 650 comprising code 655 that if executed by a processor 635 in a computing device 600 causes the processor 635 to determine when an NFC antenna 620 is expecting an NFC data transmission. The code 655 causes the processor 635 to display an indication 615 on a display 605 the location of an NFC antenna 620 located behind the display 605.

The computer readable medium 650 may include code that if executed causes a computing device to remove the indication from the display after an NFC transmission.

The techniques described above may be embodied in a computer-readable medium for configuring a computing system to execute the method. The computer readable media may include, for example and without limitation, any number of the following non-transitive mediums: magnetic storage media including disk and tape storage media; optical storage media such as compact disk media (e.g., CD-ROM, CD-R, etc.) and digital video disk storage media; holographic memory; nonvolatile memory storage media including semiconductor-based memory units such as FLASH memory, EEPROM, EPROM, ROM; ferromagnetic digital memories; volatile storage media including registers, buffers or caches, main memory, RAM, etc.; and the Internet, just to name a few. Other new and various types of computer-readable media may be used to store the software modules discussed herein. Computing systems may be found in many forms including but not limited to mainframes, minicomputers, servers, workstations, personal computers, notepads, personal digital assistants, various wireless devices and embedded systems, just to name a few.

In the foregoing description, numerous details are set forth to provide an understanding of the present invention. However, it will be understood by those skilled in the art that the present invention may be practiced without these details. While the invention has been disclosed with respect to a limited number of embodiments, those skilled in the art will appreciate numerous modifications and variations without departing from the scope of the appended claims.

## Claims

1. A computing device (100) comprising:
a display (105);
a Near Field Communication,NFC, antenna (120) behind the display (105);
a storage device (340) to store outlines of multiple NFC devices; and
a controller (225) configured to:
execute an application that expects to communicate through the NFC antenna,
retrieve an outline of an NFC device that is expected to be communicated with from the stored outlines of multiple NFC devices, and
display via the display (105) an indication (115) of the location of the NFC antenna (120), wherein the indication (115) includes the retrieved outline.

2. The device of claim 1, further comprising logic to instruct the controller (225) to display the indication (115) on the screen when logic is expecting communication through the NFC antenna (120).

3. The device of claim 1, further comprising an input device (335) to control when the controller (225) displays the indication (115) on the display (105).

4. The device of claim 1, wherein the controller (225) is to remove the indication (115) from the display (105) after a data transmission through NFC antenna (120) is complete.

5. The device of claim 1, wherein the display (105) is a touch screen and senses the NFC device on the display (105) and the computing device (100) is to direct movement of the NFC device until the NFC antenna (120) and the NFC device communicate.

6. A method of displaying a location of a near field communication, NFC, antenna (120) on a display (105) of a computing device (100) comprising:
executing an application that expects to communicate through the NFC antenna,
retrieving, from a storage device (340), data indicating the location of an indication (115) to be displayed on the display (105) of the computing device (100);
retrieving, from the storage device (340), an outline of an NFC device that is expected to communicate with the NFC antenna (120), the outline retrieved from among outlines of multiple NFC devices stored by the storage device (340); and
displaying, on the display (105), an indication (115) of the location of the NFC antenna (120), wherein the indication (115) includes the retrieved outline.

7. The method of claim 6, further comprising determining if the NFC antenna (120) is expecting a data transfer.

8. The method of claim 6, further comprising determining the location of the NFC antenna (120) from the model number of the computing device (100).

9. The method of claim 6, further comprising determining the location of the NFC antenna (120) from sensors.

10. The method of claim 6, further comprising removing the indication (115) from the display (105) after an NFC data transmission occurs.

11. The method of claim 6, further comprising determining the NFC device that is expected to communicate with the NFC antenna (120).

12. A non-transitory computer readable medium comprising code that if executed by a processor in a computing device (100) according to any one of claims 1-5 causes the processor to carry out the method of any one of claims 8 to 11.

## Patentansprüche

1. Rechenvorrichtung (100), Folgendes umfassend:
eine Anzeige (105);
eine Nahfeldkommunikations(*Near Field Communication* - NFC)antenne (120) hinter der Anzeige (105);
eine Speichervorrichtung (340) zum Speichern von Umrissen mehrerer NFC-Vorrichtungen; und
einen Controller (225), der zu Folgendem konfiguriert ist:
Ausführen einer Anwendung, die erwartet, durch die NFC-Antenne zu kommunizieren,
Abrufen eines Umrisses einer NFC-Vorrichtung, von der erwartet wird, dass mit ihr kommuniziert wird, aus den gespeicherten Umrissen mehrerer NFC-Vorrichtungen, und
Anzeigen eines Hinweises (115) des Standortes der NFC-Antenne (120) über die Anzeige (105), wobei der Hinweis (115) den abgerufenen Umriss beinhaltet.

2. Vorrichtung nach Anspruch 1, ferner Logik umfassend, um den Controller (225) anzuweisen, den Hinweis (115) auf dem Bildschirm anzuzeigen, wenn die Logik eine Kommunikation durch die NFC-Antenne (120) erwartet.

3. Vorrichtung nach Anspruch 1, ferner umfassend eine Eingabevorrichtung (335), um zu steuern, wann der Controller (225) den Hinweis (115) auf der Anzeige (105) anzeigt.

4. Vorrichtung nach Anspruch 1, wobei der Controller (225) den Hinweis (115) von der Anzeige (105) entfernen soll, nachdem eine Datenübertragung durch die NFC-Antenne (120) abgeschlossen wurde.

5. Vorrichtung nach Anspruch 1, wobei die Anzeige (105) ein berührungsempfindlicher Bildschirm ist und die NFC-Vorrichtung auf der Anzeige (105) erfasst und wobei die Rechenvorrichtung (100) eine Bewegung der NFC-Vorrichtung lenken soll, bis die NFC-Antenne (120) und die NFC-Vorrichtung kommunizieren.

6. Verfahren zum Anzeigen eines Standortes einer Nahfeldkommunikations(NFC)antenne (120) auf einer Anzeige (105) einer Rechenvorrichtung (100), Folgendes umfassend:
Ausführen einer Anwendung, die erwartet, durch die NFC-Antenne zu kommunizieren,
Abrufen von Daten aus einer Speichervorrichtung (340), die den Standort eines Hinweises (115) angeben, der auf der Anzeige (105) der Rechenvorrichtung (100) angezeigt werden soll;
Abrufen eines Umrisses einer NFC-Vorrichtung, von der erwartet wird, dass sie mit der NFC-Antenne (120) kommuniziert, von der Speichervorrichtung (340), wobei der Umriss unter Umrissen mehrerer NFC-Vorrichtungen, die durch die Speichervorrichtung (340) gespeichert werden, abgerufen wird; und
Anzeigen eines Hinweises (115) des Standortes der NFC-Antenne (120) über die Anzeige (105), wobei der Hinweis (115) den abgerufenen Umriss beinhaltet.

7. Verfahren nach Anspruch 6, ferner umfassend das Bestimmen, ob die NFC-Antenne (120) eine Datenübertragung erwartet.

8. Verfahren nach Anspruch 6, ferner umfassend das Bestimmen des Standortes der NFC-Antenne (120) aus der Modellnummer der Rechenvorrichtung (100).

9. Verfahren nach Anspruch 6, ferner umfassend das Bestimmen des Standortes der NFC-Antenne (120) von Sensoren.

10. Verfahren nach Anspruch 6, ferner umfassend das Entfernen des Hinweises (115) von der Anzeige (105), nachdem eine NFC-Datenübertragung stattgefunden hat.

11. Verfahren nach Anspruch 6, ferner umfassend das Bestimmen der NFC-Vorrichtung, von der erwartet wird, mit der NFC-Antenne (120) zu kommunizieren.

12. Nichtflüchtiges computerlesbares Medium, Code umfassend, der, wenn er von einem Prozessor in einer Rechenvorrichtung (100) nach einem der Ansprüche 1-5 ausgeführt wird, den Prozessor dazu veranlasst, das Verfahren nach einem der Ansprüche 8 bis 11 durchzuführen.

## Revendications

1. Dispositif informatique (100) comprenant :
un écran (105) ;
une antenne de communication en champ proche, NFC (120) derrière l'écran (105) ;
un dispositif de stockage (340) pour stocker les contours de plusieurs dispositifs NFC ; et
un dispositif de commande (225) configuré pour :
exécuter une application devant communiquer au moyen de l'antenne NFC,
récupérer le contour d'un dispositif NFC au moyen duquel il est prévu de communiquer avec les contours stockés de plusieurs dispositifs NFC, et
afficher, par l'intermédiaire de l'écran (105), une indication (115) de l'emplacement de l'antenne NFC (120), l'indication (115) comprenant le contour récupéré.

2. Dispositif selon la revendication 1, comprenant en outre une logique donnant pour instruction au contrôleur (225) d'afficher l'indication (115) sur l'écran lorsque la logique attend une communication au moyen de l'antenne NFC (120).

3. Dispositif selon la revendication 1, comprenant en outre un dispositif d'entrée (335) pour commander le moment où le contrôleur (225) affiche l'indication (115) sur l'écran (105).

4. Dispositif selon la revendication 1, dans lequel le contrôleur (225) doit supprimer l'indication (115) de l'écran (105) après la fin d'une transmission de données par l'antenne NFC (120).

5. Dispositif selon la revendication 1, dans lequel l'affichage (105) est un écran tactile et détecte le dispositif NFC sur l'écran (105) et le dispositif informatique (100) doit diriger le mouvement du dispositif NFC jusqu'à ce que l'antenne NFC (120) et le dispositif NFC communiquent.

6. Procédé d'affichage d'un emplacement d'une antenne de communication en champ proche, NFC (120), sur l'écran (105) d'un dispositif informatique (100) consistant à :
exécuter une application censée communiquer par l'intermédiaire de l'antenne NFC, récupérer, à partir d'un dispositif de stockage (340), les données indiquant l'emplacement d'une indication (115) à afficher sur l'écran (105) du dispositif informatique (100) ;
récupérer, à partir du dispositif de stockage (340), le contour d'un dispositif NFC censé communiquer avec l'antenne NFC (120), le contour étant récupéré parmi les contours de plusieurs dispositifs NFC stockés par le dispositif de stockage (340) ; et
afficher sur l'écran (105) une indication (115) de l'emplacement de l'antenne NFC (120), dans lequel l'indication (115) comprend le contour récupéré.

7. Procédé selon la revendication 6, consistant en outre à déterminer si l'antenne NFC (120) attend un transfert de données.

8. Procédé selon la revendication 6, comprenant en outre la détermination de l'emplacement de l'antenne NFC (120) à partir du numéro de modèle du dispositif informatique (100).

9. Procédé selon la revendication 6, comprenant en outre la détermination de l'emplacement de l'antenne NFC (120) à partir de capteurs.

10. Procédé selon la revendication 6, comprenant en outre le retrait de l'indication (115) de l'écran (105) après transmission de données NFC.

11. Procédé selon la revendication 6, comprenant en outre la détermination du dispositif NFC qui est censé communiquer avec l'antenne NFC (120).

12. Support non transitoire lisible par ordinateur comprenant un code qui, s'il est exécuté par un processeur dans un dispositif informatique (100) selon l'une quelconque des revendications 1 à 5, amène le processeur à exécuter le procédé selon l'une quelconque des revendications 8 à 11.
